# EUROPÄISCHE PATENTSCHRIFT

(11) **EP 2 964 585 B1**
(45) Veröffentlichungstag und Bekanntmachung des Hinweises auf die Patenterteilung: **21.08.2019**
(21) Anmeldenummer: 14701028.4
(22) Anmeldetag: 20.01.2014
(51) Int. Cl.: C03C 17/36

(54) **BESCHICHTETE SCHEIBE MIT TEILENTSCHICHTETEN BEREICHEN**
COATED PANE WITH PARTIALLY UNCOATED SECTIONS
VITRE REVÊTUE AVEC ZONES PARTIELLEMENT SANS REVÊTEMENT

(30) Priorität: 07.03.2013 EP 13158152
(43) Veröffentlichungstag der Anmeldung: 13.01.2016
(73) Patentinhaber: Saint-Gobain Glass France, 92400 Courbevoie (FR)
(72) Erfinder: ARSLAN, Ilkay, 52074 Aachen (DE); BEHMKE, Michael, 40227 Düsseldorf (DE); DROSTE, Stefan, 52134 Herzogenrath (DE); VON DER WEIDEN, Ingo, 52074 Aachen (DE); WOHLFEIL, Dirk, B-4730 Raeren (BE)
(74) Vertreter: Gebauer, Dieter Edmund
(86) Internationale Anmeldenummer: PCT/EP2014/050996
(87) Internationale Veröffentlichungsnummer: WO 2014/135296

(56) Entgegenhaltungen:
- WO-A2-2004/051869
- DE-A1- 10 314 094
- DE-C1- 19 817 712

## Beschreibung

Die Erfindung betrifft eine beschichtete Scheibe mit Fenstern in Form von teilentschichteten Bereichen zur Durchlässigkeit von radiofrequenter Strahlung sowie ein Verfahren zu deren Herstellung und deren Verwendung.

Scheiben mit metallischen Schichten sind sowohl im Bereich der Bauverglasungen als auch im Bereich der Fahrzeugverglasungen weit verbreitet. In Abhängigkeit von der metallischen Beschichtung beeinflussen diese metallbasierten Beschichtungen das Transmissions-, Reflexions- und Absorptionsverhalten von elektromagnetischer Strahlung. Insbesondere die Verringerung der Wärmestrahlung oder die elektrische Heizung der Glasoberfläche sind Kernfunktionen vieler Glasbeschichtungen auf Basis von elektrisch leitfähigen Metallen.

Beschichtungen aus Silber verringern deutlich die Transmission infraroter Wärmestrahlung in dem hinter der Scheibe liegenden Raum eines Fahrzeuges oder Gebäudes. Insbesondere bei Fahrzeugen kann diese Eigenschaft noch über einen elektrischen Anschluss mit einer Heizfunktion der silberhaltigen Beschichtung kombiniert werden. Der spezifische Flächenwiderstand von Silber ermöglicht die Beheizung einer Scheibe mit sehr dünnen silberhaltigen Schichten. Scheiben mit silberhaltigen oder metallischen Beschichtungen finden sich daher aufgrund der genannten Vorteile in immer mehr Fahrzeugen.

Scheiben mit silberhaltigen Beschichtungen beinhalten aber auch Nachteile, so wird beispielsweise radiofrequente Strahlung von vielen metallhaltigen Beschichtungen reflektiert. Die Funktionsweise vieler Sensoren, Navigations-, Telekommunikations- oder Radiogeräte wird hierdurch deutlich beeinträchtigt. Um diese Probleme zu lösen, ist in der Regel eine zumindest teilflächige Entschichtung der metallhaltigen Beschichtung notwendig. Im Beispiel von elektromagnetischer Strahlung im Radiofrequenzbereich wie FM, AM, UHF, VHF, Radar oder Mikrowellenstrahlung ist hierzu eine netz- oder gitterartige Entschichtung notwendig. Die Gittermaschen müssen dabei einen Linienabstand aufweisen, welcher deutlich kleiner als die fragliche Wellenlänge der gewünschten elektromagnetischen Strahlung ist. Hierzu werden beispielsweise mit einem geeigneten Laser die metallhaltigen Beschichtungen in Form von Linien entfernt. Da nur geringe Anteile der metallhaltigen Beschichtung entfernt werden müssen, bleibt die Infrarotstrahlen-reflektierende Wirkung größtenteils erhalten.

EP 0 678 483 B1 offenbart ein Glassubstrat mit mehreren dünnen Schichten. Diese Schichten umfassen eine Haftschicht auf der Basis von Titanoxid, Zinnoxid oder Tantaloxid, eine Deckschicht und eine Funktionsschicht aus der Gruppe der rostfreien Stahle. Die Dicke der Funktionsschicht beträgt bevorzugt 15 nm bis 45 nm.

US 2002/0192473 A1 offenbart ein transparentes Substrat mit einer mehrlagigen Beschichtung, welche Sonneneinstrahlung beeinflussen kann. Die Beschichtung umfasst mindestens eine funktionelle Metallschicht aus Niob, Tantal oder Zirkonium und eine Deckschicht aus Aluminiumnitrid, Alumiumoxynitrid oder Siliziumnitrid.

US 2011/0146172 A1 offenbart ein transparentes Substrat mit einer dünnen mehrschichtigen Beschichtung. Die mehrlagige Beschichtung umfasst dabei mindestens zwei absorbierende Funktionsschichten und zwei transparente Schichten aus einem dielektrischen Material. Die Funktionsschichten enthalten bevorzugt ein Metall der Gruppe aus Niob, Tantal und Zirkonium. In einer bevorzugten Ausführungsform sind die Funktionsschichten zumindest teilweise nitriert.

US 2007/0082219 A1 offenbart ein heizbares Glassubstrat mit einer mehrlagigen silberhaltigen Beschichtung. Die Beschichtung erlaubt sowohl eine Temperaturkontrolle im Fahrzeug als auch eine Heizfunktion der Scheibe. Die Beschichtung und damit die Scheibe sind für elektromagnetische Strahlung undurchlässig.

DE 198 17 712 C1 offenbart eine Glasscheibe mit einer Beschichtung und einem Strahlungsfenster. Das Fenster ist einem begrenzten zusammenhängenden Flächenbereich der Platte ausgebildet, in dem ein Verhältnis von schichtfreier Fläche zur Gesamtfläche von mindestens 25 % bei flächiger Verteilung von schichtfreien und beschichteten Flächen vorliegt.

WO2004/051869 A2 offenbart eine metallisch beschichtete Scheibe, welche eine für Radio frequenzsignale durchlässiges Fenster aufweist. Das Fenster beinhaltet verschiedene für Radiofrequenzsignale durchlässige Strukturen, beispielsweise vertikale oder horizontale Balken oder zickzackförmige Strukturen.

US 6,730,389 B2 offenbart eine metallisch beschichtete Scheibe, welche mehrere miteinander verbundene für radiofrequente Strahlung durchlässige Fenster aufweist.

WO 2012/066324 A1 offenbart ein Verfahren zur Herstellung einer beschichteten Verglasung mit einem für elektromagnetische Strahlung im Radio frequenzbereich durchlässigen Fenster. Das Fenster wird durch eine zweidimensionale kurvenförmige Strukturierung mittels eines Lasers erzeugt.

Wird eine beschichte Scheibe im Bereich der Kommunikationsfenster zumindest teilweise entschichtet, so kommt es beim Biegeprozess im Übergangsbereich zwischen der beschichteten Scheibe und der teilentschichteten Scheibe zu Spannung im Glas. Diese Spannungen resultieren wahrscheinlich aus der unterschiedlichen Wärmeaufnahme der beschichteten und teilentschichteten Bereiche auf der Glasoberfläche. Folgen des Spannungsaufbaus im Grenzbereich zwischen beschichteter Scheibenoberfläche und dem Kommunikationsfenster sind in vielen Fällen optische Verzerrungen auf der Glasoberfläche, welche sich störend auf den Gesamteindruck der Scheibe auswirken. Viele Fahrzeughersteller verlangen aufgrund der gesetzlichen Bestimmungen, beispielsweise ECE R43, zudem die Einhaltung enger Grenzwerte im Bereich der optischen Qualität der Fahrzeugscheibe.

Die Aufgabe der vorliegenden Erfindung liegt darin, eine metallisch beschichtete Scheibe bereitzustellen, welche im Grenzbereich zwischen teilentschichtetem Kommunikationsfenster und der flächigen Beschichtung der Scheibe keine oder zumindest verringerte optischen Verzerrungen aufweist.

Die Aufgabe der vorliegenden Erfindung wird gemäß dem unabhängigen Anspruch 1 gelöst. Bevorzugte Ausführungen gehen aus den Unteransprüchen hervor.

Ein erfindungsgemäßes Verfahren zur Herstellung einer beschichteten Scheibe mit Kommunikationsfenster sowie deren Verwendung gehen aus weiteren unabhängigen Ansprüchen hervor.

Die erfindungsgemäße beschichtete Scheibe mit Kommunikationsfenster umfasst mindestens eine Grundscheibe mit einer metallhaltigen Beschichtung. Die Scheibe enthält bevorzugt Flachglas, Floatglas, Quarzglas, Borosilikatglas, Kalk-Natron-Glas und/oder Gemische davon. Alternativ kann die Scheibe auch Polymere wie Polycarbonat oder Polymethylmethacrylat (Plexiglas) umfassen. Die Beschichtung enthält bevorzugt Zinndotiertes Indiumoxid (ITO), Aluminium-dotiertes Zinkoxid (AZO), Fluor-dotiertes Zinnoxid (FTO, SnO₂:F), Antimon-dotiertes Zinnoxid (ATO, SnO₂:Sb), Aluminium, Zink, Indium, Gallium, Silber, Gold, Zinn, Wolfram, Kupfer, Cadmium, Niob, Strontium, Silizium, Zink, Selen und/oder Gemische oder Legierungen davon, besonders bevorzugt Silber. Neben der eigentlichen Beschichtung sind bevorzugt noch weitere dielektrische Schichten vorhanden. Die dielektrische Schicht umfasst bevorzugt SiO₂, SnO₂, Bi₂O₃, ZnO, TiO₂, Ta₂O₅, AlN, Si₃N₄ und/oder Gemische davon. Die Reihenfolge der Abscheidung von dielektrischer Schicht und Funktionsschicht auf der Verbundscheibe ist variabel, bevorzugt werden mehrere Funktionsschichten und dielektrische Schichten auf der Verbundscheibe abgeschieden. Optional können weitere Schichten, beispielsweise Deckschichten, vorhanden sein. Die metallhaltige Beschichtung ist bevorzugt undurchlässig für Radar-, Mikro- und/oder Radiowellen.

Die Grundscheibe weist auf der metallhaltigen Beschichtung eine lokal begrenzte, Gitterfläche aus sich kreuzenden und entschichteten inneren Gitterlinien auf. Das bedeutet, dass die Gitterlinien, bevorzugt durch Entschichtung, insbesondere Laserentschichtung, in die metallhaltige Beschichtung eingebracht sind. Die Gitterlinien sind daher Bereiche ohne metallhaltige Beschichtung. Die Gitterfläche kann eine beliebige eckige und/oder abgerundete Form aufweisen. Die Gitterfläche ist von einem Gitterflächenrand voll- oder teilflächig umgeben. Der Gitterflächenrand weist wie die Gitterfläche sich kreuzende äußere Gitterlinien auf. Die äußeren Gitterlinien bilden bevorzugt eine Verlängerung der inneren Gitterlinien nach außen in Richtung der nicht strukturierten metallischen Beschichtung. Das Grundmuster der inneren Gitterlinien und äußeren Gitterlinien ist ähnlich oder identisch ausgebildet. Die äußeren Gitterlinien weisen von dem äußeren Rand der Gitterfläche bis zum Ende des Gitterflächenrandes an größer werdende Unterbrechungen auf. Der Ausdruck "Unterbrechung" bedeutet im Sinne der Erfindung ein Fehlen der Strukturierung im Bereich der äußeren Gitterlinien oder auch bevorzugt im Bereich der Kreuzungspunkte der äußeren Gitterlinien.

Die äußeren Gitterlinien enthalten Verlängerungen der inneren Gitterlinien. Die äußeren Gitterlinien enthalten außerdem Gitterlinien, welche parallel zur äußersten unterbrechungslosen, die Gitterfläche umrandenden Gitterlinie angeordnet sind. Die sich kreuzenden äußeren Gitterlinien des erfindungsgemäß ausgebildeten Gitterflächenrand werden in dieser bevorzugten Ausgestaltung also mindestens gebildet durch:
- zum einen Verlängerungen der inneren Gitterlinien und
- zum anderen Gitterlinien, die parallel zur äußersten die Gitterfläche umrandenden Gitterlinie angeordnet sind. Der Gitterflächenrand kann darüber hinaus weitere äußere Gitterlinien umfassen.

Der besondere Vorteil liegt in einer besonderen optischen Unauffälligkeit und eine besonders ästhetische, für den Betrachter wenig störende Wahrnehmung der Scheibe.

Die Gitterfläche im Sinne der Erfindung wird durch den Bereich definiert, der keine Unterbrechungen aufweist.

Die erfindungsgemäßen Unterbrechungen sind in den Verlängerungen der inneren Gitterlinien und/oder in den parallel zur äußersten umrandenden Gitterlinie angeordneten äußeren Gitterlinien angeordnet. Erfindungsgemäß sind die Unterbrechungen an den Kreuzungspunkten der äußeren Gitterlinien angeordnet.

Die Gitterlinien weisen bevorzugt eine Breite von 30 µm bis 200 µm, besonders bevorzugt 70 µm bis 120 µm auf. Die Breite richtet sich nach der betreffenden elektromagnetischen Strahlung und der optischen Auflösung des zur Erzeugung notwendigen Laserscanners.

Die Gitterlinien bilden bevorzugt Quadrate und/oder Rechtecke. Die rechteckigen Formen können dabei bei gebogenen Scheiben, insbesondere bei dreidimensional gebogenen Scheiben, vom rechten Winkel abweichen und in beispielsweise ein Viereck, Trapez oder Parallelogramm übergehen. Je nach, insbesondere räumlicher, Geometrie der Scheibe sind auch abgerundete oder teilweise abgerundete Sensor- oder Kommunikationsfenster möglich.

Die Gitterlinien weisen bevorzugt einen Abstand von 0,2 mm bis 15 mm, bevorzugt 0,7 mm bis 3 mm auf. Der bevorzugte Abstand der Gitterlinien ermöglicht eine ausreichende Transparenz für radiofrequente elektromagnetische Wellen.

Die Fläche der Unterbrechungen nimmt bevorzugt graduell auf 70 % bis 100 % der Fläche der inneren Gitterlinien zwischen den Kreuzungspunkten zu. Die Breite des Gitterflächenrands im Sinne der Erfindung beträgt bevorzugt von 1 mm bis 30 mm. Die graduelle Zunahme erfolgt bevorzugt über eine Strecke von 1 mm bis 30 mm von den nicht unterbrochenen Gitterlinien (100 %) auf 70 % bis 90 % der ursprünglichen Fläche der Gitterlinien zwischen zwei benachbarten Kreuzungspunkten.

Die metallhaltige Beschichtung ist bevorzugt undurchlässig für Radar-, Mikro- und/oder Radiowellen.

Die Grundscheibe umfasst bevorzugt Floatglas. Die inneren Gitterlinien und die äußeren Gitterlinien weisen bevorzugt einen Winkel von 30° bis 60°, besonders bevorzugt von 40° bis 50°, zur Floatglasproduktionsrichtung der Grundscheibe auf. Der Ausdruck "Floatglasproduktionsrichtung" beschreibt die Laufrichtung des Glases beim Floatglasproduktionsprozess. Überraschenderweise sind die optischen Störungen nach dem Biegen der teilentschichteten Scheibe niedriger, wenn die Gitterlinien einen oben genannten Winkel zur Laufrichtung des Glases im Zinnbad (Floatglasprozess) und anschließend im Laufband aufweisen.

Die Erfindung umfasst des Weiteren eine Windschutzscheibe mit den Merkmalen der erfindungsgemäßen beschichteten Scheibe mit einem Kommunikationsfenster.

Die Erfindung umfasst des Weiteren ein Verfahren zur Herstellung einer beschichteten Scheibe mit einem Kommunikationsfenster. In einem ersten Verfahrensschritt wird eine Grundscheibe mit einer metallhaltigen Beschichtung versehen. Optional können auch weitere dielektrische und weitere metallische Schichten aufgetragen werden. Im folgenden Schritt wird die metallhaltige Beschichtung mit einem Laser lokal in Form von Gitterlinien entschichtet und eine erste Gitterfläche sowie ein Gitterflächenrand erhalten. Die äußeren Gitterlinien weisen von der innen liegenden Gitterfläche bis zum Ende des Gitterflächenrandes größer werdende Unterbrechungen auf. Die Unterbrechungen befinden sich sowohl im Bereich der Kreuzungspunkte als auch auf den Gitterlinien zwischen den Kreuzungspunkten. Der Ausdruck "Unterbrechung" bedeutet im Sinne der Erfindung ein Fehlen der Strukturierung im Bereich der äußeren Gitterlinien. In einem abschließenden Schritt wird die beschichtete und (teil-)strukturierte Grundscheibe im Bereich der Erweichungstemperatur des jeweiligen Glases gebogen. Die erfindungsgemäßen äußeren unterbrochenen Gitterlinien verringern überraschenderweise die optisch sichtbaren Verzerrungen zwischen den beschichteten und teilentschichteten Bereichen im Umkreis des Kommunikationsfensters. Insbesondere die unterschiedliche Wärmeaufnahme von beschichteten Bereichen der Grundscheibe und den entschichteten Gitterlinien führt bei Kommunikationsfenstern nach dem Stand der Technik am Kommunikationsfenster schnell zu optischen Störungen, beispielsweise inhomogenen Lichtreflexionen.

Der Laser wird bevorzugt mit einer Geschwindigkeit von 0,100 m/s bis 10 m/s entlang der metallhaltigen Beschichtung auf der Grundscheibe geführt. Der Laser weist bevorzugt eine Leistung von 1 W bis 10 kW auf und/oder umfasst bevorzugt einen Kohlendioxid-, YAG-, Nd-YAG-, Ytterbium-YAG-Laser, Holmium-YAG-Laser, Erbium-YAG-Laser, - Neodym-Glas-Laser, - Excimerlaser, - Faserlaser, - Disklaser, - Slablaser oder Dioden-Laser.

Der Laser wird bevorzugt über einen Plotter geführt. Der Plotter kann die Größe der Gitterflächen noch weiter steigern.

Die Erfindung umfasst des Weiteren die Verwendung der erfindungsgemäßen beschichteten Scheibe mit einem Kommunikationsfenster als Bau-, Fahrzeug-, Schiff-, Flugzeug-, Hubschrauber- oder Zugverglasung. Die erfindungsgemäße beschichtete Scheibe mit einem Kommunikationsfenster wird bevorzugt als Fahrzeugwindschutzscheibe verwendet.

Im Folgenden wird die Erfindung anhand von einer Zeichnung näher erläutert. Die Zeichnung ist eine rein schematische Darstellung und nicht maßstabsgetreu. Sie schränkt die Erfindung in keiner Weise ein. Die Positionen der schwarzen Linien markieren die entschichteten Bereiche. Diese entschichteten Bereiche wirken auf einer realen beschichteten Scheibe leicht heller als die beschichtete Umgebung.

Es zeigen:
Figur 1 eine schematische Ansicht eines Kommunikationsfensters nach dem Stand der Technik,
Figur 2 eine schematische Ansicht eines erfindungsgemäßen Kommunikationsfensters,
Figur 3 eine vergrößerte Ansicht der inneren Gitterlinien und äußeren Gitterlinien,
Figur 4 eine Ansicht einer erfindungsgemäßen beschichteten Scheibe mit Kommunikationsfenster und
Figur 5 ein Fliesschema zur Herstellung einer erfindungsgemäßen Scheibe mit Kommunikationsfenster.

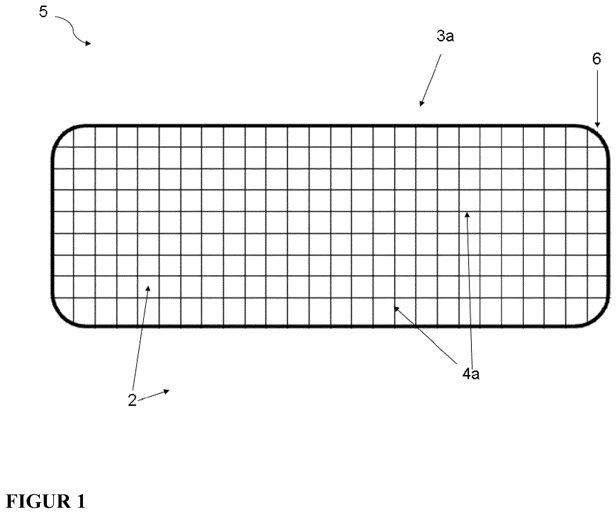

Figur 1 zeigt eine schematische Ansicht eines Kommunikationsfensters (5) nach dem Stand der Technik. Auf der metallhaltigen Beschichtung (2) ist eine im Bereich der inneren Gitterlinien (4a) entschichtete Gitterfläche (3a) aufgebracht. Im Grenzbereich (6) zwischen der Gitterfläche (3a) und der umliegenden metallhaltigen Beschichtung (2) kann es an der realen Scheibe leicht zu optischen Verzerrungen kommen, beispielsweise Lichtreflexen oder Verschwimmungen. Der Grenzbereich (6) ist zur Veranschaulichung optisch hervorgehoben, in der realen Scheibe aber in der Regel nicht durch eine verstärkte Linie (Entschichtung) gekennzeichnet. Insbesondere bei Grundscheiben (1) welche nach dem Beschichtungsvorgang und anschließender Teilentschichtung noch gebogen werden zeigen sich diese optischen Effekte. Das unterschiedliche Temperaturaufnahmevermögen der beschichteten und teilentschichten Bereiche beim Biegevorgang induziert ein unterschiedliches Stressprofil in der nicht gezeigten Grundscheibe (1).

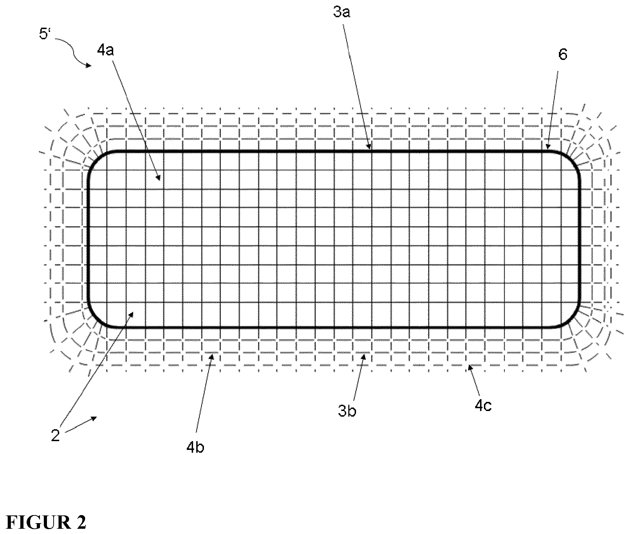

Figur 2 zeigt eine schematische Ansicht eines erfindungsgemäßen Kommunikationsfensters (5'). Auf der metallhaltigen Beschichtung (2) ist eine im Bereich der inneren Gitterlinien (4a) entschichtete Gitterfläche (3a) aufgebracht. Die Gitterfläche (3a) ist von einem Gitterflächenrand (3b) umgeben, wobei der Gitterflächenrand (3b) von äußeren Gitterlinien (4b) gebildet wird. Die äußeren Gitterlinien (4b) weisen von innen nach außen größer werdende Unterbrechungen (4c) aus. Diese Unterbrechungen (4c) können sowohl wie in Figur 2 gezeigt im Bereich der Kreuzungspunkte zwischen den äußeren Gitterlinien (4b) als auch auf den äußeren Gitterlinien (4b) selbst zwischen den Kreuzungspunkten angeordnet sein. Die Umrandung der Gitterfläche (3a) mit dem erfindungsgemäßen Gitterflächenrand (3b) verringert überraschenderweise deutlich das Auftreten optischer Störungen im Bereich des Kommunikationsfensters (5').

Die Gitterfläche 3a im Sinne der Erfindung ist der Bereich, welcher keine Unterbrechungen 4c der Gitterlinien aufweist. Die äußerste die Gitterfläche 3a umrandende Gitterlinie (Grenzbereich 6) ist in der Figur lediglich zur Veranschaulichung breiter dargestellt als die übrigen Gitterlinien. Der Gitterflächenrand 3b enthält äußere Gitterlinien 4b, die Verlängerungen der inneren Gitterlinien 4a bilden. Der Gitterflächenrand 3b enthält außerdem äußere Gitterlinien 4b, die parallel zur verbreitert dargestellten, äußersten die Gitterfläche 3a umrandende Gitterlinie 6 angeordnet sind. Der Gitterflächenrand 3b enthält außerdem zusätzliche äußere Gitterlinien 4b im Bereich der abgerundeten Ecken der Gitterfläche 3a.

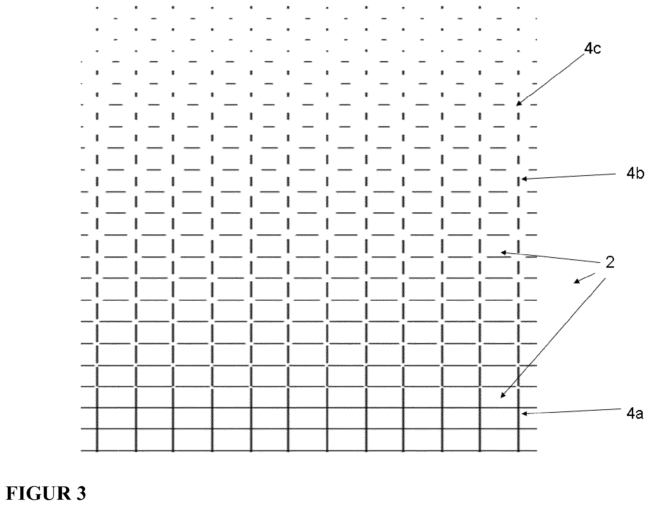

Figur 3 zeigt eine vergrößerte Ansicht der inneren Gitterlinien (4a) und äußeren Gitterlinien (4b). Die inneren Gitterlinien (4a) und die äußeren Gitterlinien (4b) verlaufen bevorzugt ohne Übergang ineinander. Die Unterbrechungen (4c), beispielsweise im Kreuzungspunkt der Gitterlinien (4b) kennzeichnen den Beginn der äußeren Gitterlinien (4b). Die Fläche der Unterbrechungen (4c) nimmt von den inneren Gitterlinien (4a) in Richtung der äußeren Gitterlinien (4b) zu. Diese Zunahme der Unterbrechungen (4c) erzeugt einen graduellen Übergang zwischen dem erfindungsgemäßen teilentschichten Kommunikationsfenster (5') und der metallhaltigen Beschichtung (2) auf der Grundscheibe (1).

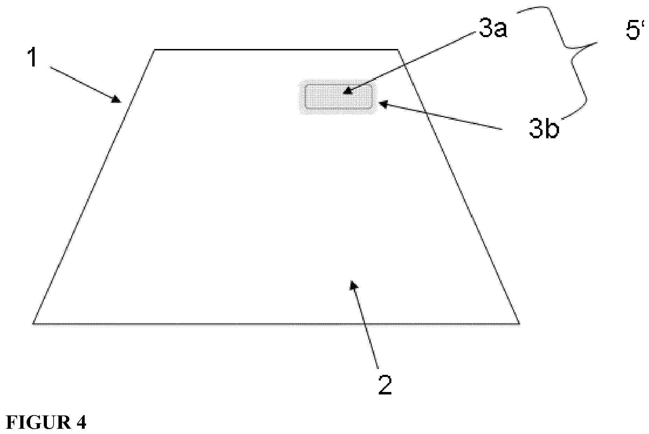

Figur 4 zeigt eine Ansicht einer erfindungsgemäßen beschichteten Scheibe mit erfindungsgemäßem Kommunikationsfenster (5'). Auf einer Grundscheibe (1) ist eine metallhaltige Beschichtung (2) aufgebracht. Auf einem Bereich der metallhaltigen Beschichtung (2) befindet sich ein erfindungsgemäßes Kommunikationsfenster (5') umfassend eine Gitterfläche (3a) und einen Gitterflächenrand (3b). Auf der metallhaltigen Beschichtung (2) können weitere Kommunikationsfenster (5') aufgebracht sein.

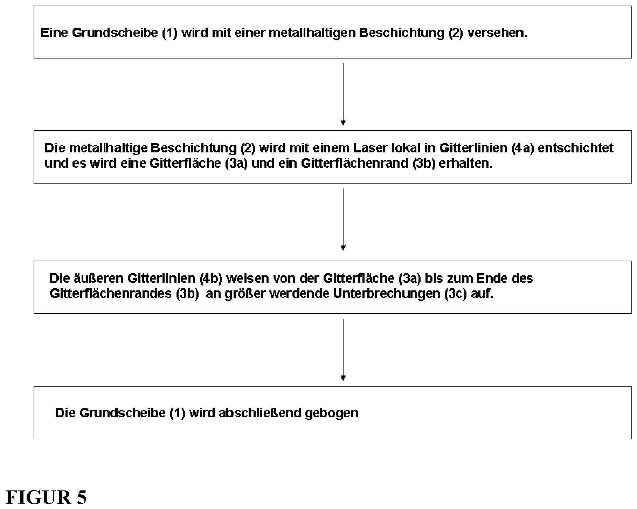

Figur 5 zeigt ein Fliesschema zur Herstellung einer erfindungsgemäßen Scheibe mit Kommunikationsfenster (5'). In einem ersten Verfahrensschritt wird eine Grundscheibe (1) mit einer metallhaltigen Beschichtung (2) versehen. Im folgenden Schritt wird die metallhaltige Beschichtung (2) mit einem Laser lokal in Form von Gitterlinien entschichtet und eine erste Gitterfläche (3a) und ein Gitterflächenrand (3b) erhalten. Die äußeren Gitterlinien (4b) weisen von der innen liegenden Gitterfläche (3a) bis zum Ende des Gitterflächenrandes (3b) größer werdende Unterbrechungen (4c) auf. Die erfindungsgemäßen Gitterlinien (4a, 4b) verringern überraschenderweise die optisch sichtbaren Verzerrungen zwischen den beschichteten und teilentschichten Bereichen im Umkreis des Kommunikationsfensters (5). Insbesondere die unterschiedliche Wärmeaufnahme von beschichteten Bereichen der Grundscheibe (1) und den entschichteten Gitterlinien (4a) führt bei Kommunikationsfenstern nach dem Stand der Technik am Kommunikationsfenster schnell zu optischen Störungen, beispielsweise inhomogenen Lichtreflexionen.

### Bezugszeichenliste

- (1): Grundscheibe
- (2): metallhaltige Beschichtung
- (3a): Gitterfläche
- (3b): Gitterflächenrand
- (4a): innere Gitterlinien
- (4b): äußere Gitterlinien
- (4c): Unterbrechungen
- (5): Kommunikationsfenster nach dem Stand der Technik
- (5'): erfindungsgemäßes Kommunikationsfenster
- (6): Grenzbereich der Gitterfläche

## Patentansprüche

1. Beschichtete Scheibe mit Kommunikationsfenster (5') mindestens umfassend:
a. eine Grundscheibe (1),
b. eine metallhaltige Beschichtung (2) auf der Grundscheibe (1),
c. eine Gitterfläche (3a) aus sich kreuzenden, entschichteten inneren Gitterlinien (4a) in der metallhaltigen Beschichtung (2), wobei die Gitterfläche (3a) einen Gitterflächenrand (3b) aufweist und
d. der Gitterflächenrand (3b) sich kreuzende äußere Gitterlinien (4b) aufweist, wobei die äußeren Gitterlinien (4b) von dem äußeren Rand der Gitterfläche (3a) bis zum Ende des Gitterflächenrandes (3b) an größer werdende Unterbrechungen (4c) aufweisen,
wobei die äußeren Gitterlinien (4b) Verlängerungen der inneren Gitterlinien (4a) enthalten, wobei die äußeren Gitterlinien (4b) Gitterlinien enthalten, die parallel zur äußersten die Gitterfläche (3a) umrandenden Gitterlinie (6) angeordnet sind, und wobei die Unterbrechungen (4c) an den Kreuzungspunkten der äußeren Gitterlinien angeordnet sind.

2. Beschichtete Scheibe nach Anspruch 1, wobei die Gitterlinien (4) eine Breite von 30 µm bis 200 µm, besonders bevorzugt 70 µm bis 120 µm aufweisen.

3. Beschichtete Scheibe nach einem der Ansprüche 1 oder 2, wobei die Gitterlinien (4) Quadrate, Rauten, Parallelogramme und/oder Rechtecke bilden.

4. Beschichte Scheibe nach einem der Ansprüche 1 bis 3, wobei die Gitterlinien (4) einen Abstand von 0,1 mm bis 15 mm, bevorzugt 0,7 mm bis 3 mm aufweisen.

5. Beschichtete Scheibe nach einem der Ansprüche 1 bis 4, wobei der Gitterflächenrand (3b) eine Breite von 1 mm bis 30 mm aufweist.

6. Beschichtete Scheibe nach einem der Ansprüche 1 bis 5, wobei die Grundscheibe (1) Floatglas umfasst.

7. Beschichte Scheibe nach Anspruch 6, wobei die inneren Gitterlinien (4a) und die äußeren Gitterlinien (4b) einen Winkel von 30° bis 60° zur Floatglasproduktionsrichtung der Grundscheibe (1) aufweisen.

8. Windschutzscheibe umfassend eine beschichtete Scheibe nach den Ansprüchen 1 bis 7.

9. Verfahren zur Herstellung einer beschichteten Scheibe mit Kommunikationsfenster, wobei,
a. eine Grundscheibe (1) mit einer metallhaltigen Beschichtung (2) versehen wird,
b. die metallhaltige Beschichtung (2) mit einem Laser lokal in Gitterlinien (4a) entschichtet wird und eine Gitterfläche (3a) und ein Gitterflächenrand (3b) erhalten wird, wobei
c. die äußeren Gitterlinien (4b) von der Gitterfläche (3a) bis zum Ende des Gitterflächenrandes (3b) an größer werdende Unterbrechungen (3c) aufweisen und
d. die Grundscheibe (1) gebogen wird,
wobei die äußeren Gitterlinien (4b) Verlängerungen der inneren Gitterlinien (4a) enthalten, wobei die äußeren Gitterlinien (4b) Gitterlinien enthalten, die parallel zur äußersten die Gitterfläche (3a) umrandenden Gitterlinie (6) angeordnet sind, und wobei die Unterbrechungen (4c) an den Kreuzungspunkten der äußeren Gitterlinien angeordnet sind.

10. Verfahren nach Anspruch 9, wobei der Laser mit einer Geschwindigkeit von 0,100 m/s bis 10 m/s entlang der metallhaltigen Beschichtung (2) geführt wird.

11. Verfahren nach Anspruch 9 oder 10, wobei der Laser einen Kohlendioxid-, YAG- , Nd-YAG- oder Dioden-Laser umfasst und bevorzugt eine Leistung von 0,001 kW bis 10 kW aufweist.

12. Verfahren nach einem der Ansprüche 9 bis 11, wobei der Laser über einen Plotter geführt wird.

13. Verwendung der beschichteten Scheibe nach einem der Ansprüche 1 bis 7 als Bau-, Fahrzeug-, Schiff-, Flugzeug-, Hubschrauber- oder Zugverglasung, bevorzugt als Fahrzeugwindschutzscheibe.

## Claims

1. Coated pane with a communication window (5') comprising at least:
a. a base pane (1),
b. a metal-containing coating (2) on the base pane (1),
c. a grid area (3a) made of intersecting, de-coated inner gridlines (4a) in the metal-containing coating (2), wherein the grid area (3a) has a grid area edge (3b), and
d. the grid area edge (3b) has intersecting outer gridlines (4b), wherein the outer gridlines (4b) have interruptions (4c) increasing in size from the outer edge of the grid area (3a) all the way to the end of the grid surface edge (3b),
wherein the outer gridlines (4b) include extensions of the inner gridlines (4a), wherein the outer gridlines (4b) include gridlines that are arranged parallel to the outermost grid line (6) bordering the grid area (3a), and wherein the interruptions (4c) are arranged at the points of intersection of the outer gridlines.

2. Coated pane according to claim 1, wherein the gridlines (4) have a width from 30 µm to 200 µm, particularly preferably 70 µm to 120 µm.

3. Coated pane according to claim 1 or 2, wherein the gridlines (4) form squares, rhombuses, parallelograms, and/or rectangles.

4. Coated pane according to one of claims 1 through 3, wherein the gridlines (4) are from 0.1 mm to 15 mm apart, preferably 0.7 mm to 3 mm.

5. Coated pane according to one of claims 1 through 4, wherein the grid area edge (3b) has a width from 1 mm to 30 mm.

6. Coated pane according to one of claims 1 through 5, wherein the base pane (1) comprises float glass.

7. Coated pane according to claim 6, wherein the inner gridlines (4a) and the outer gridlines (4b) have an angle of 30° to 60° relative to the float glass production direction of the base pane (1).

8. Windshield comprising a coated pane according to claims 1 through 7.

9. Method for producing a coated pane with a communication window, wherein,
a. a base pane (1) is provided with a metal-containing coating (2),
b. the metal-containing coating (2) is de-coated locally with a laser in gridlines (4a), and a grid area (3a) and a grid area edge (3b) are obtained, wherein
c. the outer gridlines (4b) have interruptions (3c) increasing in size from the grid area (3a) all the way to the end of the grid surface edge (3b), and
d. the base pane (1) is bent,
wherein the outer gridlines (4b) include extensions of the inner gridlines (4a), wherein the outer gridlines (4b) include gridlines that are arranged parallel to the outermost grid line (6) bordering the grid area (3a), and wherein the interruptions (4c) are arranged at the points of intersection of the outer gridlines.

10. Method according to claim 9, wherein the laser is guided at a speed from 0.100 m/sec to 10 m/sec along the metal-containing coating (2).

11. Method according to claim 9 or 10, wherein the laser comprises a carbon dioxide, YAG, Nd-YAG, or diode laser and preferably has an output from 0.001 kW to 10 kW.

12. Method according to one of claims 9 through 11, wherein the laser is guided by a plotter.

13. Use of the coated pane according to one of claims 1 through 7 as architectural, motor vehicle, ship, airplane, helicopter, or train glazing, preferably as a motor vehicle windshield.

## Revendications

1. Vitre revêtue avec fenêtre de communication (5') comprenant au moins:
a. une vitre de base (1),
b. un revêtement contenant un métal (2) sur la vitre de base (1),
c. une surface de quadrillage (3a) composée de lignes de quadrillage intérieures sans revêtement (4a) qui se croisent dans le revêtement contenant un métal (2), où la surface de quadrillage (3a) présente un bord de surface de quadrillage (3b) et
d. le bord de la surface de quadrillage (3b) présente des lignes de quadrillage extérieures (4b) qui se croisent, où les lignes de quadrillage extérieures (4b) présente des interruptions (4c) en augmentation du bord extérieur de la surface de quadrillage (3a) jusqu'à à l'extrémité du bord de la surface de quadrillage (3b), où les lignes de quadrillage extérieures (4b) contiennent des lignes de quadrillage qui sont disposées parallèles à la ligne de quadrillage (6) la plus à l'extérieur qui entoure la surface de quadrillage (3a), et où les interruptions (40) sont disposées aux points d'intersection des lignes de quadrillage extérieures.

2. Vitre revêtue selon la revendication 1, où les lignes de grille (4) présente une largeur de 30 microns à 200 microns, de manière particulièrement préférée de 70 microns à 120 microns.

3. Vitre revêtue selon l'une des revendications 1 ou 2, où les lignes de grille (4) forment des carrés, des losanges, des parallélogrammes et/ou des rectangles.

4. Vitre revêtue selon l'une des revendications 1 à 3, où les lignes de grille (4) présente un écart de 0,1 mm à 15 mm, de préférence 0,7 mm à 3 mm.

5. Vitre revêtue selon l'une quelconque des revendications 1 à 4, où le bord de surface de grille (3b) présente une largeur de 1 mm à 30 mm.

6. Vitre revêtue selon l'une quelconque des revendications 1 à 5, où la vitre de base (1) comprend du verre flottant.

7. Vitre revêtue selon la revendication 6, où les lignes de grille intérieures (4a) et les lignes de grille extérieures (4b) présentent un angle de 30° à 60° par rapport à la direction de production de verre flottant de la vitre de base (1).

8. Pare-brise comprenant une vitre revêtue selon les revendications 1 à 7.

9. Procédé de fabrication d'une vitre revêtue avec fenêtre de communication, où
a. une vitre de base (1) est munie d'un revêtement contenant du métal (2),
b. le revêtement contenant du métal (2) est enlevé localement en lignes de quadrillage (4a) à l'aide d'un laser pour ainsi obtenir une surface de quadrillage (3a) et un bord de la surface de quadrillage (3b), où
c. les lignes de quadrillage extérieures (4b) de la surface du quadrillage (3a) présentent des interruptions (3c) en augmentation jusqu'à l'extrémité du bord de la surface de quadrillage (3b) et
d. la vitre de base (1) est pliée, où les lignes de quadrillage extérieures (4b) contiennent des extensions des lignes de quadrillage intérieures (4a), où les lignes de quadrillage extérieures (4b) contiennent des lignes de quadrillage qui sont disposées parallèles à la ligne de quadrillage (6) la plus à l'extérieur qui entoure la surface de quadrillage (3a), et où les interruptions (40) sont disposées aux points d'intersection des lignes de quadrillage extérieures.

10. Procédé selon la revendication 9, où le laser est guidé à une vitesse de 0,100 m/s à 10 m/s le long du revêtement contenant du métal (2).

11. Procédé selon la revendication 9 ou 10, où le laser comprend un dioxyde de carbone, du YAG-, du Nd-YAG ou des laser à diodes et de préférence une puissance de 0,001 kW à 10 kW.

12. Procédé selon l'une des revendications 9 à 11, où le laser est guidé à l'aide d'un traceur.

13. Utilisation de la vitre revêtue selon l'une quelconque des revendications 1 à 7 comme vitrage de construction, de véhicule, de navire, d'avion d'hélicoptère ou de train, de préférence comme pare-brise de véhicule.
